# EUROPEAN PATENT APPLICATION

(11) **EP 4 541 850 A1**
(43) Date of publication of application: **23.04.2025**
(21) Application number: 23827027.6
(22) Date of filing: 09.06.2023
(51) Int. Cl.: C08L 27/18, C08F 8/00, H01B 7/02

(54) **CROSSLINKABLE FLUORORESIN COMPOSITION, MOLDED BODY, CROSSLINKED MOLDED BODY, AND COATED WIRE**

(30) Priority: 20.06.2022 JP 2022099070
(71) Applicant: AGC INC., Chiyoda-ku, Tokyo 1008405 (JP)
(72) Inventor: ABE, Masatoshi, Tokyo 100-8405 (JP); SHIBASAKI, Kosuke, Tokyo 100-8405 (JP); SASAKI, Toru, Tokyo 100-8405 (JP)
(74) Representative: Müller-Boré & Partner Patentanwälte PartG mbB
(86) International application number: PCT/JP2023/021624
(87) International publication number: WO 2023/248841

(57) **Abstract**

The present invention provides a crosslinkable fluororesin composition with which it is possible to obtain a molded body, a crosslinked molded body, and a coated wire which have excellent heat resistance and are less likely to have a problem of staining. A crosslinkable fluororesin composition according to the present invention comprises: a fluororesin having a unit based on ethylene and a unit based on tetrafluoroethylene, is melt-moldable, and has a melting point of 210°C or higher; a crosslinking agent having a plurality of unsaturated carbon bonds; and an antioxidant having at least one of a phenol group and a phosphorus atom and has a molecular weight of 600 or more. A molded body, a crosslinked molded body, and a coated wire according to the present invention are obtained from the crosslinkable fluororesin composition according to the present invention.

## Description

### TECHNICAL FIELD

The present invention relates to a crosslinkable fluororesin composition, a molded body, a crosslinked molded body, and a coated wire.

### BACKGROUND ART

A copolymer having a unit based on ethylene and a unit based on tetrafluoroethylene (hereinafter, may be referred to as "ETFE") has excellent heat resistance, atmospheric corrosion resistance, electrical insulating properties, non-adhesiveness, and water and oil repellency. In addition, ETFE is also characterized by having high moldability and mechanical strength among fluororesins.

Therefore, by subjecting ETFE to a molding process through a melt-molding method such as extrusion molding, blow molding, injection molding, and rotational molding, a wide range of molding-process products such as a coated wire, a tube, a sheet, a film, a filament, a pump casing, joints, a packing, a lining, and a coating are produced.

A molded body of a resin composition obtained by blending a crosslinking agent with ETFE may be formed into a crosslinked molded body by irradiating the molded body with ionizing radiation (Patent Document 1). By forming the molded body into the crosslinked molded body, abrasion resistance and rigidity are improved.

However, a molded body or a crosslinked molded body of ETFE does not always have sufficient heat resistance. In addition, there is also a problem in that staining occurs in a molded body or a crosslinked molded body.

Patent Document 2 discloses that heat resistance of a molded body or a crosslinked molded body is improved by blending ETFE with copper oxide, but it cannot be said that an effect thereof is sufficient.

### Citation List

### Patent Documents

Patent Document 1: PCT International Publication No. WO2016/210314
Patent Document 2: PCT International Publication No. WO2013/015202

### SUMMARY OF INVENTION

### Technical Problem

The present invention provides a crosslinkable fluororesin composition with which it is possible to obtain a molded body, a crosslinked molded body, and a coated wire which have excellent heat resistance and are less likely to have a problem of staining.

### Solution to Problem

The present invention has the following aspects.
[1] A crosslinkable fluororesin composition, comprising:
   a fluororesin having a unit based on ethylene and a unit based on tetrafluoroethylene, is melt-moldable, and has a melting point of 210°C or higher;
   a crosslinking agent having a plurality of unsaturated carbon bonds; and
   an antioxidant having at least one of a phenol group and a phosphorus atom and has a molecular weight of 600 or more.
[2] The crosslinkable fluororesin composition according to [1],
   in which the antioxidant has a phenol group and a phosphorus atom.
[3] The crosslinkable fluororesin composition according to [1] or [2],
   in which the fluororesin further has a unit based on another monomer other than ethylene and tetrafluoroethylene.
[4] The crosslinkable fluororesin composition according to any one of [1] to [3],
   in which the fluororesin has a hydroxyl group at a main chain terminal.
[5] A molded body made of a molding material comprising a crosslinkable fluororesin composition,
   in which the crosslinkable fluororesin composition comprising
   a fluororesin having a unit based on ethylene and a unit based on tetrafluoroethylene, is melt-moldable, and has a melting point of 210°C or higher,
   a crosslinking agent having a plurality of unsaturated carbon bonds, and
   an antioxidant having at least one of a phenol group and a phosphorus atom and has a molecular weight of 600 or more.
[6] The molded body according to [5],
   in which the antioxidant has a phenol group and a phosphorus atom.
[7] The molded body according to [5] or [6],
   in which the fluororesin further has a unit based on another monomer other than ethylene and tetrafluoroethylene.
[8] The molded body according to any one of [5] to [7],
   in which the fluororesin has a hydroxyl group at a main chain terminal.
[9] A crosslinked molded body that is a crosslinked body of a molding material comprising a crosslinkable fluororesin composition,
   in which the crosslinkable fluororesin composition comprises
   a fluororesin having a unit based on ethylene and a unit based on tetrafluoroethylene, is melt-moldable, and has a melting point of 210°C or higher,
   a crosslinking agent having a plurality of unsaturated carbon bonds, and
   an antioxidant having at least one of a phenol group and a phosphorus atom and has a molecular weight of 600 or more.
[10] The crosslinked molded body according to [9],
   in which the antioxidant has a phenol group and a phosphorus atom.
[11] The crosslinked molded body according to [9] or [10],
   in which the fluororesin further has a unit based on another monomer other than ethylene and tetrafluoroethylene.
[12] The crosslinked molded body according to any one of [9] to [11],
   in which the fluororesin has a hydroxyl group at a main chain terminal.
[13] A coated wire having a coating layer,
   in which the coating layer is the crosslinked molded body according to any one of [9] to [12].

### Advantageous Effects of Invention

With a crosslinkable fluororesin composition according to the present invention, it is possible to obtain a molded body, a crosslinked molded body, and a coated wire which have excellent heat resistance and are less likely to have a problem of staining.

A molded body, a crosslinked molded body, and a coated wire according to the present invention have excellent heat resistance and are less likely to have a problem of staining.

### DESCRIPTION OF EMBODIMENTS

### <Term>

The term "unit" is a collective term for an atomic group directly formed by polymerizing one molecule of a monomer and an atomic group obtained by chemically converting part of the atomic group.

The phrase "unit based on a monomer" refers to an atomic group directly formed by polymerizing one molecule of a monomer.

The term "monomer" refers to a compound having a polymerizable carbon-carbon double bond.

Being "melt-moldable" means exhibiting melt-fluidity.

A "crosslinked molded body" is a molded body that no longer exhibits melt-fluidity.

The phrase "exhibiting melt-fluidity" means that, under a condition of a load of 49 N, there is a temperature at which a melt-flow rate is 0.1 to 1000 g/10 min at a temperature higher than a melting point of a resin by 20°C or higher.

A "melt-flow rate" is a melt mass flow rate (MFR) defined in JIS K 7210-1:2014 (corresponding international standard ISO 1133-1:2011).

A "melting point" is a temperature corresponding to a maximum value of a melting peak measured through a differential scanning calorimetry (DSC) method.

A "crosslinking agent" is a blending agent required for increasing crosslinking efficiency at a low concentration when allowing a crosslinking reaction of a polymer to generate a crosslinked polymer.

An "antioxidant" is an additive added for the purpose of preventing deterioration, discoloration, and spoilage due to oxidation.

A "mass-average molecular weight" of a fluororesin is an average molecular weight considering a mass fraction identified by a GPC method.

Each of "tensile strength" and "tensile elongation" is obtained by producing a dumbbell-shaped test piece (thickness: 1 mm) from a sample (a fluororesin composition or a fluororesin), and performing a tensile test on the test piece under conditions in conformity with ASTM D 638.

The term "to" indicating a numerical range means that numerical values described before and after "to" are included as a lower limit value and an upper limit value. Lower limit values and upper limit values of numerical ranges disclosed in the present specification can be arbitrarily combined to generate a new numerical range.

### <Crosslinkable Fluororesin Composition>

A crosslinkable fluororesin composition according to the present invention comprises a fluororesin having a unit based on ethylene and a unit based on tetrafluoroethylene, is melt-moldable, and has a melting point of 210°C or higher, a crosslinking agent having a plurality of unsaturated carbon bonds, and an antioxidant having at least one of a phenol group and a phosphorus atom and has a molecular weight of 600 or more.

### [Fluororesin]

The fluororesin in the fluororesin composition is a copolymer (ETFE) having a unit based on ethylene (hereinafter, may be referred to as "E") (hereinafter, may be referred to as an "E unit") and a unit based on tetrafluoroethylene (hereinafter, may be referred to as "TFE") (hereinafter, may be referred to as a "TFE unit").

As the ETFE, from the viewpoint that heat resistance, mechanical properties, and chemical resistance are further improved, a copolymer having an E unit, a TFE unit, and a unit based on another monomer other than ethylene and TFE (hereinafter, also referred to as "another monomer unit") is preferable.

The other monomer needs only be copolymerizable with ethylene and TFE, and may be used alone or in combination of two or more kinds thereof.

Examples of the other monomer unit include units based on monomers according to (1) to (7) below. The monomers according to (1) to (7) below may be used alone or in combination of two or more kinds thereof.
(1) A compound represented by Formula 1 below.

   CH₂=CX(CF₂)ₙZ Formula 1

   However, X and Z each independently represents a hydrogen atom or a fluorine atom, and n is an integer of 1 to 10.
(2) Olefin such as propylene, butene, or isobutylene (excluding ethylene).
(3) Fluoroolefin having no hydrogen atom in an unsaturated group, such as hexafluoropropylene (HFP) and chlorotrifluoroethylene (CTFE) (excluding TFE).
(4) Fluoroolefin having a hydrogen atom in an unsaturated group, such as vinylidene fluoride (VDF), vinyl fluoride (VF), trifluoroethylene, hexafluoroisobutylene.
(5) Perfluoro(alkyl vinyl ether) (PAVE) such as perfluoro(methyl vinyl ether) (PMVE), perfluoro(ethyl vinyl ether) (PEVE), perfluoro(propyl vinyl ether) (PPVE), and perfluoro(butyl vinyl ether) (PBVE).
(6) Perfluoro vinyl ether having two unsaturated bonds such as CF₂=CFOCF₂CF=CF₂, CF₂=CFO(CF₂)₂CF=CF₂.
(7) A fluorine-containing monomer having a fluorine-containing alicyclic structure, such as perfluoro(2,2-dimethyl-1,3-dioxolane) (PDD), 2,2,4-trifluoro-5-trifluoromethoxy-1,3-dioxole, and perfluoro(2-methylene-4-methyl-1,3-dioxolane).

Among these, from the viewpoint that mechanical properties and thermal stability are further improved, ETFE having a unit based on a compound represented by Formula 1 above (hereinafter, also referred to as "FAE") is preferable.

From the viewpoint that flexibility, elongation, and strength are further improved, X in Formula 1 is preferably a hydrogen atom.

From the viewpoint that heat resistance and chemical resistance are further improved, Z in Formula 1 is preferably a fluorine atom.

n in Formula 1 is preferably 2 to 8, more preferably 2 to 6, and still more preferably 2, 4, or 6. In a case where n is the lower limit value or more, the mechanical properties and the thermal stability of the present composition are further improved, and in a case where n is the upper limit value or less, the FAE has sufficient polymerization reactivity.

Examples of the preferable FAE include CH₂=CH(CF₂)₂F, CH₂=CH(CF₂)₄F, CH₂=CH(CF₂)₆F, CH₂=CF(CF₂)₄F, and CH₂=CF(CF₂)₃H. Among these, from the viewpoint that mechanical properties and thermal stability are further improved, CH₂=CH(CF₂)₄F (hereinafter, also referred to as PFBE) is preferable.

The FAE may be used alone or in combination of two or more kinds thereof.

In the ETFE, a molar ratio of the E unit to the TFE unit (E unit/TFE unit) is preferably 30/70 to 60/40, and more preferably 35/65 to 60/40. **In** a case where the E unit/TFE unit is the lower limit value or more, a melting point of the ETFE is sufficiently high, and heat resistance and rigidity at a high temperature are excellent, and in a case where the E unit/TFE unit is the upper limit value or less, chemical resistance is excellent.

A proportion of the other monomer unit is preferably 0.7 to 5.0 mol% and more preferably 0.9 to 4.0 mol% with respect to all units constituting the ETFE. **In** a case where the proportion of the other monomer unit is the lower limit value or more, stress cracking resistance at a high temperature is further improved, and in a case where the proportion is the upper limit value or less, the melting point of the ETFE is sufficiently high, and heat resistance and rigidity at a high temperature are excellent.

The ETFE preferably has a hydroxyl group at a main chain terminal. **In** a case where the fluororesin contains ETFE having a hydroxyl group at a main chain terminal as a main component, heat resistance is improved, and a tensile strength retention rate and a tensile elongation retention rate, which will be described later, are likely to be increased.

The main chain terminal of the ETFE can be confirmed by analyzing the ETFE through infrared spectroscopy.

The content of the hydroxyl group at the main chain terminal is preferably 1% to 50% and more preferably 3% to 30% in an area ratio of a peak (for example, a peak at 3540 cm⁻¹) of the hydroxyl group to a peak (for example, a peak at 2210 cm⁻¹) of the harmonic of a C-F bond in an infrared absorption (IR) spectrum. In a case where the content of the hydroxyl group at the main chain terminal is the lower limit value or more, strength is excellent, and in a case where the content is the upper limit value or less, heat resistance is further improved.

The content of the hydroxyl group at the main chain terminal can be adjusted by the molecular weight of ETFE.

The fluororesin (ETFE) in the fluororesin composition is melt-moldable. That is, under the condition of the load of 49 N, there is a temperature at which a melt mass flow rate (MFR) defined in JIS K 7210:1999 (ISO 1133:1997) is 0.1 to 1000 g/10 min at a temperature higher than a melting point of the resin by 20°C or higher.

The fluororesin (ETFE) in the fluororesin composition has the melting point of 210°C or higher. The melting point of the fluororesin is preferably 210°C to 320°C, more preferably 245°C to 270°C, and still more preferably 250°C to 265°C. In a case where the melting point of the ETFE is the lower limit value or higher, heat resistance and rigidity at a high temperature are excellent, and in a case where the melting point is the upper limit value or lower, the moldability is excellent.

The melting point of the fluororesin (ETFE) can be adjusted with the molar ratio of the E unit to the TFE unit, a proportion of the other monomer unit to all units constituting the ETFE, and the like.

In order to increase the melting point of the ETFE, it is considered that crystallinity need only be increased by, for example, making the molar ratio of (E/TFE) close to 50/50 and reducing the content of the other monomer. In addition, in order to lower the melting point, it is considered that the crystallinity need only be lowered by, for example, increasing the content of TFE to make the molar ratio of (E/TFE) far from 50/50 and increasing the content of the other monomer.

The melt mass flow rate (MFR) of the fluororesin (ETFE) at 297°C is preferably 15 to 150 g/10 min, more preferably 20 to 100 g/10 min, still more preferably 20 to 70 g/10 min, and particularly preferably 20 to 60 g/10 min.

The melt mass flow rate is also a measure of the molecular weight, and indicates that the molecular weight is high in a case where the melt mass flow rate is small and indicates that the molecular weight is low in a case where the melt mass flow rate is large. In a case where the melt mass flow rate at 297°C is 15 g/10 min or more, it is advantageous for high-speed molding. In a case where the melt mass flow rate at 297°C is 150 g/10 minutes or less, the molded body has improved stress cracking resistance. In a case where the melt mass flow rate at 297°C is within the numerical range, the high-speed moldability is excellent, and the stress cracking resistance is also excellent.

The melt mass flow rate of the fluororesin (ETFE) can be controlled by adjusting the molecular weight of the ETFE. For example, by setting the mass-average molecular weight of the ETFE to about 300,000 to about 600,000, the melt mass flow rate of the ETFE at 297°C can be set to 15 to 150 g/10 min.

A method of manufacturing the fluororesin (ETFE) is not particularly limited, and a generally used polymerization method using a radical polymerization initiator is used. Examples of the polymerization method include bulk polymerization, solution polymerization, suspension polymerization, and emulsion polymerization. In particular, solution polymerization is preferable.

As a radical polymerization initiator used for polymerization, a radical polymerization initiator in which a half-life is 10 hours at a temperature of 0°C to 100°C is preferable, and a radical polymerization initiator in which a half-life is 10 hours at a temperature of 20°C to 90°C is more preferable.

Examples of the radical polymerization initiator include azo compounds such as azobisisobutyronitrile; peroxydicarbonates such as diisopropyl peroxydicarbonate; peroxyesters such as tert-butyl peroxy pivalate, tert-butyl peroxy isobutyrate, and tert-butyl peroxy acetate; non-fluorine diacyl peroxides such as isobutyryl peroxide, octanoyl peroxide, benzoyl peroxide, and lauroyl peroxide; fluorine-containing diacyl peroxides such as (Z(CF₂)ₚCOO)₂ (here, Z represents a hydrogen atom, a fluorine atom, or a chlorine atom, and p represents an integer of 1 to 10); perfluoro tert-butyl peroxide; and inorganic peroxides such as potassium persulfate, sodium persulfate, and ammonium persulfate.

In a case where the fluororesin (ETFE) is produced through solution polymerization, examples of a polymerization medium include organic solvents such as fluorinated hydrocarbon, chlorinated hydrocarbon, fluorinated chlorinated hydrocarbon, alcohols, and hydrocarbon.

Examples of the polymerization medium include perfluorocarbons such as n-perfluorohexane, n-perfluoroheptane, perfluorocyclobutane, perfluorocyclohexane, and perfluorobenzene; hydrofluorocarbons such as 1,1,2,2-tetrafluorocyclobutane, CF₃CFHCF₂CF₂CF₃, CF₃(CF₂)₄H, CF₃CF₂CFHCF₂CF₃, CF₃CFHCFHCF₂CF₃, CF₂HCFHCF₂CF₂CF₃, CF₃(CF₂)₅H, CF₃CH(CF₃)CF₂CF₂CF₃, CF₃CF(CF₃)CFHCF₂CF₃, CF₃CF(CF₃)CFHCFHCF₃, CF₃CH(CF₃)CFHCF₂CF₃, CF₃CF₂CH₂CH₃, and CF₃(CF₂)₃CH₂CH₃; and hydrofluoroethers such as CF₃CH₂OCF₂CF₂H, CF₃(CF₃)CFCF₂OCH₃, and CF₃(CF₂)₃OCH₃.

Polymerization conditions are not particularly limited. A polymerization temperature is preferably 0°C to 100°C and more preferably 20°C to 90°C. A polymerization pressure is preferably 0.1 to 10 MPa and more preferably 0.5 to 3 MPa. A polymerization time is preferably 1 to 30 hours.

A method of adjusting the molecular weight of the ETFE, that is, a method of adjusting the melt mass flow rate of the ETFE is not particularly limited. Examples thereof include a method of adding a chain transfer agent, a method of adjusting a molecular weight during polymerization, such as controlling a polymerization pressure, a method of adjusting a molecular weight by breaking a molecule by applying energy such as heat or radiation to ETFE obtained by polymerization, and a method of adjusting a molecular weight by chemically breaking a molecular chain of ETFE obtained by polymerization with a radical. In particular, the method of controlling a molecular weight during polymerization using a chain transfer agent is preferable.

Examples of the chain transfer agent include alcohols such as methanol, ethanol, 2,2,2-trifluoroethanol, 2,2,3,3-tetrafluoropropanol, 1,1,1,3,3,3-hexafluoroisopropanol, and 2,2,3,3,3-pentafluoropropanol; fluorinated hydrocarbons such as 1,3-dichloro-1,1,2,2,3-pentafluoropropane and 1,1-dichloro-1-fluoroethane; hydrocarbons such as n-pentane, n-hexane, n-heptane, and cyclohexane; hydrofluorocarbons such as CF₂H₂; ketones such as acetone; mercaptans such as methyl mercaptan; esters such as methyl acetate and ethyl acetate; and ethers such as diethyl ether and methyl ethyl ether.

An addition amount of the chain transfer agent is usually about 0.01% to 100% by mass with respect to the polymerization medium. By adjusting the addition amount of the chain transfer agent, melt viscosity (molecular weight) of the obtained ETFE can be adjusted. That is, the higher the addition amount of the chain transfer agent, the lower the molecular weight of the ETFE obtained.

The fluororesin (ETFE) having the hydroxyl group at the main chain terminal is obtained by, for example, using an alcohol as the chain transfer agent when polymerizing a monomer. For example, in a case where an alcohol is used as a chain transfer agent, as described in paragraph [0016] of Japanese Unexamined Patent Application, First Publication No. 2016-043566, a hydroxyl group of the alcohol is introduced into a main chain terminal of ETFE, and thus ETFE having a terminal group consisting of the hydroxyl group at the main chain terminal is obtained.

As the fluororesin (ETFE) in the fluororesin composition, a commercially available product may be used or a product manufactured by various methods may be used.

For example, the product can be manufactured through a method described in paragraphs [0021] to [0025] of Patent Document 1 or a method described in paragraphs [0036] to [0043] of PCT International Publication No. WO2016/006644.

### [Crosslinking Agent]

The crosslinking agent in the fluororesin composition has two or more unsaturated bonds in one molecule. Examples of the crosslinking agent include triallyl cyanurate, triallyl isocyanurate, bismaleimide, ethylene glycol dimethacrylate, 1,4-butanediol dimethacrylate, trimethylolpropane trimethacrylate, and divinylbenzene.

Among these, a triallyl isocyanurate called TAIC is preferable from the viewpoint of high thermal stability.

An amount of the crosslinking agent to be blended is preferably 0.5 to 20 parts by mass, and more preferably 2 to 8 parts by mass, with respect to 100 parts by mass of the fluororesin. In a case where the blending amount of the crosslinking agent is the preferable lower limit value or more, strength is excellent. In a case where the blending amount of the crosslinking agent is the preferable upper limit value or less, elongation is excellent.

### [Antioxidant]

The antioxidant in the fluororesin composition has at least one of a phenol group or a phosphorus atom, and has a molecular weight of 600 or more.

The antioxidant preferably has both a phenol group and a phosphorus atom.

Suitable examples of the antioxidant include the following antioxidants, and two or more of these antioxidants may be selected and used in any combination.

Examples of the antioxidant having both a phenol group and a phosphorus atom include 2-tert-butyl-6-methyl-4-[3-(2,4,8,10-tetratert-butylbenzo[d][1,3,2]benzodioxaphosphepin-6-yl)oxypropyl]phenol and a phosphorus-modified novolac type phenolic resin.

Among these, 2-tert-butyl-6-methyl-4-[3-(2,4,8,10-tetratert-butylbenzo[d][1,3,2]benzodioxaphosphepin-6-yl)oxypropyl]phenol is preferable from the viewpoint of excellent thermal stability.

Examples of the antioxidant having a phenol group include bisphenol A, bisphenol AF, phenol, cresol, p-phenylphenol, m-phenylphenol, o-phenylphenol, allylphenol, p-hydroxybenzoic acid, p-hydroxybenzoic acid ethyl, and hindered phenol.

Examples of the hindered phenol include 3-(3,5-di-tert-butyl-4-hydroxyphenyl)octadecyl propanoate, 3-(4-hydroxy-3,5-diisopropylphenyl)octyl propanoate, and bis[3-(3,5-zi-tert-butyl-4-hydroxyphenyl)propanoate][2,2-bis[[1-oxo-3-(3,5-di-tert-butyl-4-hydroxyphenyl)propoxy]methyl]propane]-1,3-diyl.

As the antioxidant having a phosphorus atom, a phosphorus compound having a trivalent phosphorus atom is preferable.

The trivalent phosphorus atom is present in a molecule in the form of a phosphine group or a phosphonate ester group. The trivalent phosphorus atom is autoxidized to a pentavalent phosphorus atom, and thus has antioxidative properties due to a peroxide decomposition effect (disappearance of radicals generated from the peroxide).

Examples of the antioxidant having a trivalent phosphorus atom include triocyl phosphite, trilauryl phosphite, tridecyl phosphite, (octyl)diphenyl phosphite, tris(2,4-di-t-butylphenyl) phosphite, triphenyl phosphite, tris(butoxyethyl) phosphite, tris(nonylphenyl) phosphite, distearyl pentaerythritol diphosphite, tetra(tridecyl)-1,1,3-tris(2-methyl-5-t-butyl-4-hydroxyphenyl)butane diphosphite, tetra(C₁₂ to C₁₅ mixed alkyl)-4,4'-isopropylidene diphenyl diphosphite, tetra(tridecyl)-4,4'-butylidene bis(3-methyl-6-t-butylphenol) diphosphite, tris(3,5-di-t-butyl-4-hydroxyphenyl) phosphite, tris(mono/di-mixed nonylphenyl) phosphite, hydrogenated-4,4'-isopropylidene diphenol polyphosphite, bis(octylphenyl)bis[4,4'-butylidene bis(3-methyl-6-t-butylphenol)]-1,6-hexanediol diphosphite, phenyl(4,4'-isopropylidene diphenol) pentaerythritol diphosphite, distearyl pentaerythritol diphosphite, tris[4,4'-isopropylidene bis(2-t-butylphenol)] phosphite, di(isodecyl)phenyl phosphite, 4,4'-isopropylidene bis(2-t-butylphenol)bis(nonylphenyl) phosphite, 9,10-dihydro-9-oxa-10-phosphafenanthrene-10-oxide, bis(2,4-di-t-butyl-6-methylphenyl)ethylphosphite, 2-[{2,4,8,10-tetra-t-butyl dibenzo[d,f][1.3.2]-dioxaphosphepin-6-yl}oxy]-N,N-bis[2-[{2,4,8,10-tetra-t-butyl dibenzo[d,f][1.3.2]dioxaphosphepin-6-yl}oxy]ethyl]ethanamine, 6-[3-(3-t-butyl-4-hydroxy-5-methylphenyl)propoxy]-2,4,8,10-tetra-t-butyl dibenzo[d,f][1.3.2]-dioxaphosphepin, and bis(dialkylphenyl)pentaerythritol diphosphite ester.

A commercially available product may be used as the antioxidant having a trivalent phosphorus atom. Examples of a commercially available product thereof include Irgafos 168 (registered trademark, manufactured by Chiba Specialty Chemicals Corporation), Irgafos 12 (registered trademark, manufactured by Chiba Specialty Chemicals Corporation), Irgafos 38 (registered trademark, manufactured by Chiba Specialty Chemicals Corporation), ADK STAB 329K (registered trademark, manufactured by ADEKA CORPORATION), ADK STAB PEP36 (registered trademark, manufactured by ADEKA CORPORATION), ADK STAB PEP-8 (registered trademark, manufactured by ADEKA CORPORATION), Sandstab P-EPQ (registered trademark, manufactured by CLARIANT), WESTON 618 (registered trademark, manufactured by GE), WESTON 619G (registered trademark, manufactured by GE), ULTRANOX 626 (registered trademark, manufactured by GE), and SUMILIZER GP (registered trademark, manufactured by Sumitomo Chemical Co., Ltd.).

The antioxidant in the fluororesin composition has the molecular weight of 600 or more. The molecular weight of the antioxidant is preferably 600 to 50,000 and more preferably 600 to 3,000.

The molecular weight of the antioxidant is 600 or more, so that thermal stability is excellent. In a case where the molecular weight of the antioxidant is the preferable upper limit value or less, dispersibility in another polymer component is excellent.

An amount of the antioxidant to be blended is preferably 0.001 to 20 parts by mass, and more preferably 0.01 to 5 parts by mass, with respect to 100 parts by mass of the fluororesin. In a case where the blending amount of the antioxidant is the preferable lower limit value or more, thermal stability is excellent. In a case where the blending amount of the antioxidant is the preferable upper limit value or less, mechanical properties are excellent.

### [Other Components]

The crosslinkable fluororesin composition according to the present invention may contain other components as necessary. The other components may be used alone or in combination of two or more kinds thereof.

Examples of other components include additives such as a filler, a plasticizer, and a flame retardant. Examples thereof include components described in paragraphs [0042] to [0048] of PCT International Publication No. WO2019-198771.

In addition, as the other components, a fluororesin other than ETFE or a fluorine-containing elastomer may be contained. All of these are preferably less than 50% by mass and more preferably less than 35% by mass with respect to the ETFE.

Examples of the fluororesin other than ETFE include a TFE/HFP copolymer (a copolymer containing a TFE unit and an HFP unit, the same applies hereinafter), a TFE/HFP/PAVE copolymer, a TFE/PAVE copolymer [PFA], an E/TFE/HFP copolymer, a polychlorotrifluoroethylene [PCTFE], a CTFE/TFE copolymer, a CTFE/TFE/PAVE copolymer, an E/CTFE copolymer, a TFE/VDF copolymer, a VDF/HFP/TFE copolymer, a VDF/HFP copolymer, polyvinylidene fluoride (PVDF), and polyvinyl fluoride (PVF).

Examples of the fluorine-containing elastomer include a TFE/propylene (P) copolymer, an HFP/VDF copolymer, and a TFE/PAVE copolymer.

Among these, a TFE/P copolymer, an HFP/VDF copolymer, or a TFE/PAVE copolymer, which is a fluorine-containing elastomer, is preferable.

### <Molded Body>

The molded body according to the present invention is formed of a molding material comprising the crosslinkable fluororesin composition according to the present invention.

A shape of the molded body according to the present invention is not particularly limited. The molded body according to the present invention can be, for example, a ring-shape, a film shape, a coating film, or a block shape.

The molded body according to the present invention can be manufactured by subjecting the fluorine-containing copolymer composition according to the present invention to a molding process through various methods such as injection molding, extrusion molding, blow molding, press forming, rotational molding, and electrostatic coating.

Since the fluorine-containing copolymer composition according to the present invention has good fluidity at a high temperature, the molding processability through high-speed molding is excellent. In particular, in a case of injection molding, since the melt-fluidity is good, the composition can be molded into a thin-walled and complex shape.

The molded body according to the present invention can be used to obtain a crosslinked molded body according to the present invention. In addition, an uncrosslinked molded body can be used, for example, for recycling or reuse molding.

### <Crosslinked Molded Body>

The crosslinked molded body according to the present invention is a crosslinked body of a molding material containing the crosslinkable fluororesin composition according to the present invention. The crosslinked molded body according to the present invention is obtained by crosslinking the molded body according to the present invention. For example, a crosslinked molded body can be obtained by irradiating the molded body with ionizing radiation such as a γ-ray, an electron beam, and an X-ray. As the radiation, an electron beam is preferable from the viewpoint of equipment.

Crosslinking conditions cannot be generally specified since the conditions are not always the same and depend on the shape, thickness, and the like of the molded body, but it is preferable that the crosslinking be performed at least once or more in a temperature atmosphere lower than the melting point of the fluororesin, preferably in a temperature atmosphere of a glass transition point or lower, and at least once or more in a temperature atmosphere of the melting point of the fluororesin or higher.

By performing the crosslinking by emitting an electron beam in a temperature atmosphere lower than the melting point of the fluororesin, even in a case where the molded body is heated to a temperature of the melting point of the fluororesin or higher when performing the second irradiation, the molded body is not melted or deformed, and the shape of the molded body is maintained.

A radiation dose is preferably 10 to 200 kGy and more preferably 30 to 100 kGy.

The tensile strength of the crosslinked molded body is preferably 30 to 60 Pa, more preferably 35 to 60 Pa, and still more preferably 40 to 60 Pa. In a case where the tensile strength is the lower limit value or higher, the rigidity is excellent, and in a case where the tensile strength is the upper limit value or lower, the flexibility is excellent.

The tensile elongation of the crosslinked molded body is preferably 180% to 600%, more preferably 200% to 600%, and still more preferably 250% to 600%. In a case where the tensile elongation is the lower limit value or more, the flexibility is excellent, and in a case where the tensile elongation is the upper limit value or less, the rigidity is excellent.

A retention rate of the tensile strength in a case where the crosslinked molded body is held at 210°C for 85 days is preferably 50% or more, more preferably 65% or more, and still more preferably 80% or more.

A retention rate of the tensile elongation in a case where the crosslinked molded body is at 210°C for 85 days is preferably 60% or more, more preferably 90% or more, and still more preferably 150% or more.

In a case where each of the retention rates is the lower limit value or higher, the thermal stability is excellent.

The crosslinked molded body can be used as a wide range of molding-process products such as a coated wire, a tube, a sheet, a film, a filament, a pump casing, joints, a packing, a lining, and a coating.

Among these, it is preferably used as a coated wire. The coated wire of the present invention has a coating layer, and the coating layer (an insulating layer or a sheath layer) is the crosslinked molded body according to the present invention. The crosslinked molded body according to the present invention is also preferable as an insulating layer or a sheath layer of a coated wire.

### Examples

Hereinafter, the present invention will be described with reference to examples, but the present invention is not limited to these examples. Examples 1 to 5 are examples, and Examples 6 to 10 are comparative examples.

### <Raw Material>

Raw materials used in the description of each example are as follows.

Fluororesin 1: powdery ETFE, composition was TFE unit/E unit/CH₂=CH(CF₂)₄F unit=54/46/1.4 (molar ratio), a melting point was 260°C, and an average particle diameter was 30 µm.

### Crosslinking agent: triallyl isocyanurate

Antioxidant: 2-tert-butyl-6-methyl-4-[3-(2,4,8,10-tetratert-butylbenzo[d][1,3,2]benzodioxaphosphepin-6-yl)oxypropyl]phenol (molecular weight: 676.9)
Copper oxide: CuO

### <Examples 1 to 3, 6, 7, and 10>

The fluororesin composition shown in Table 1 was melt-kneaded using a biaxial extruder (φ32, a secondary extruder manufactured by TECHNOVEL CORPORATION) to obtain pellets. Kneading conditions were a cylinder temperature of 280°C to 300°C, a die temperature of 300°C, and a screw rotation speed of 200 rpm.

The obtained pellets were pressed at 300°C to produce a sheet having a thickness of 1 mm. The sheet was punched out with a ASTM D Type V dumbbell to prepare a molded body sample.

### <Examples 4, 5, 8, and 9>

The fluororesin composition shown in Table 1 was melt-kneaded using a biaxial extruder (φ32, a secondary extruder manufactured by TECHNOVEL CORPORATION) to obtain pellets. Kneading conditions were a cylinder temperature of 280°C to 300°C, a die temperature of 300°C, and a screw rotation speed of 200 rpm.

The obtained pellets were pressed at 300°C to produce a sheet having a thickness of 1 mm. The sheet was punched out with a ASTM D Type V dumbbell to prepare a molded body sample.

Next, the obtained molded body sample was irradiated with an electron beam having a radiation dose shown in Table 1 to obtain a crosslinked molded body sample.

### <Tensile Test>

A molded body sample of each Example (for Examples 4 and 5 and Examples 8 and 9, a crosslinked molded body sample, the same applies hereinafter) was subjected to a tensile test at a room temperature, with a distance of 7.62 mm between tensile rating points, and at a tensile rate of 200 mm/min, in conformity with ASTM D 638, and tensile strength and tensile elongation were measured. Table 1 shows average values of measured values obtained for the five molded body samples.

### <Heat Resistance Test>

The molded body sample of each Example (for Examples 4 and 5 and Examples 8 and 9, a crosslinked molded body sample, the same applies hereinafter) was held in a gear oven held at 210°C for a predetermined number of days (for 31 days or for 85 days), and then the tensile test was performed to measure the tensile strength and the tensile elongation. Table 1 shows average values of measured values obtained for the five molded body samples.

In addition, Table 1 shows a proportion (retention rate) of the obtained measured value to the obtained measured value for the molded body before being heated in the gear oven.

### <Evaluation of Wire>

A coating layer having a thickness of 0.2 mm with respect to a core wire having a diameter of φ1.8 mm was formed by extrusion molding using the pellets obtained in each example, and the coating layer was used to form a wire having a diameter of φ2.2 mm (a tolerance is approximately ±0.01 mm) and a length of 50 m. In Examples 1 to 3, 6, 7, and 10, the wire was used as a wire sample. In Examples 4 and 5 and Examples 8 and 9, the wires were further used as wire samples by irradiating the wire with an electron beam having a radiation dose shown in Table 1.

The wire extrusion conditions were a single-axis extruder (φ30, L/D = 24) , a cylinder temperature of 280°C to 320°C, a die temperature of 320°C, a screw rotation speed of 30 rpm, and a line speed of 10 m/min, and cooling was performed by water cooling.

The obtained wire sample was visually observed, and the number of black spots was counted. The results are shown in Table 1.

### <Anti-Dripping Properties>

The molded body sample of each Example (for Examples 4 and 5 and Examples 8 and 9, a crosslinked molded body sample, the same applies hereinafter) was crushed with a cutter to obtain a test powder having a major diameter of less than 2 mm.

The MFR of the obtained test powder was determined under the conditions of a temperature of 297°C and a load of 49 N in conformity with ASTM D3159. As a result, the presence or absence of the anti-dripping property was evaluated according to the following standard.

Present: MFR was 1.0 g/10 min or less.
Absent: MFR was 1.0 g/10 min or more.

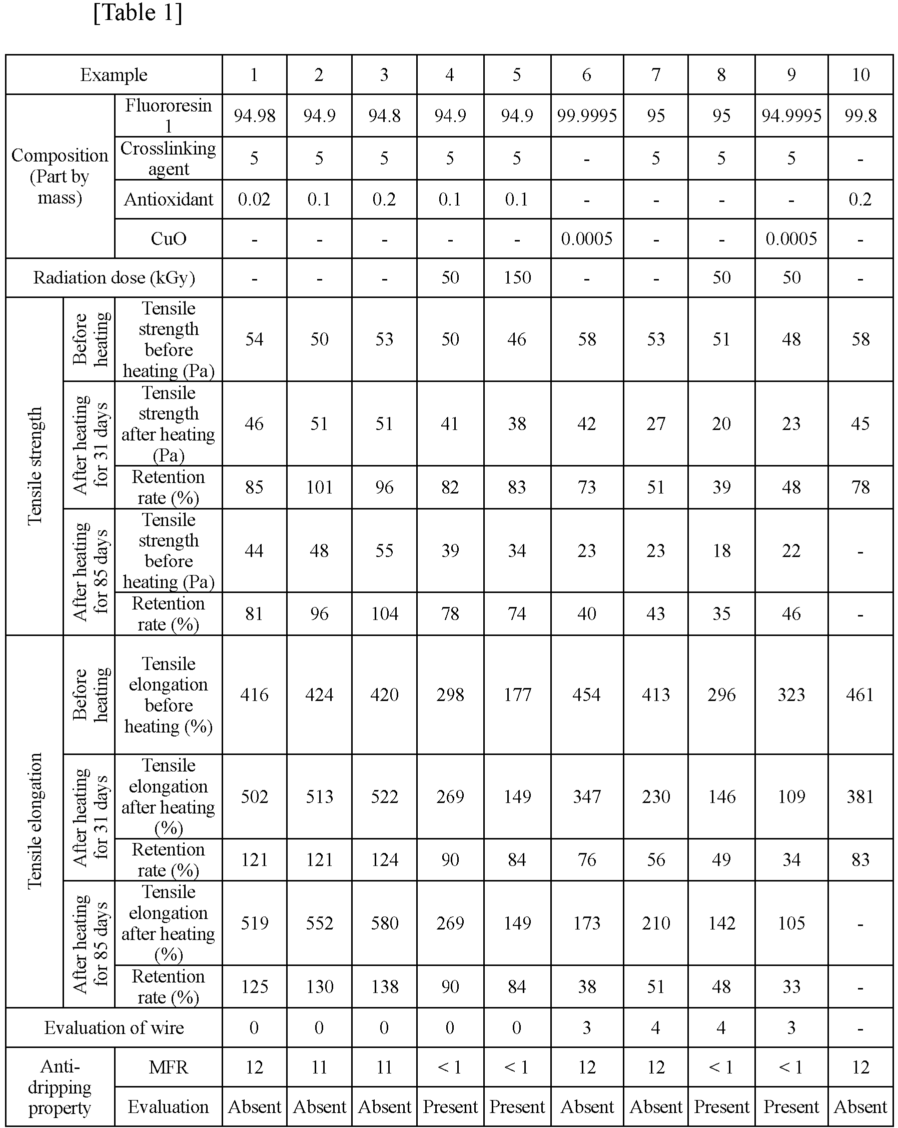

As shown in Table 1, the molded bodies (crosslinked molded bodies) of Examples 1 to 5 exhibited high retention rates of the tensile strength and the tensile elongation, and high heat resistance. In addition, in the molded bodies (crosslinked molded bodies) of Examples 1 to 5, it was confirmed that black spots were not observed on the wires and the staining was also suppressed.

### INDUSTRIAL APPLICABILITY

With the crosslinkable fluororesin composition according to the present invention, it is possible to obtain a molded body, a crosslinked molded body, and a coated wire which have excellent heat resistance and are less likely to have a problem of staining.

The molded body, the crosslinked molded body, and the coated wire according to the present invention have excellent heat resistance and are less likely to have a problem of staining.

Priority is claimed on Japanese Patent Application No. 2022-099070, filed June 20, 2022, the content of which is incorporated herein by reference.

## Claims

1. A crosslinkable fluororesin composition, comprising:
a fluororesin having a unit based on ethylene and a unit based on tetrafluoroethylene, is melt-moldable, and has a melting point of 210°C or higher;
a crosslinking agent having a plurality of unsaturated carbon bonds; and
an antioxidant having at least one of a phenol group and a phosphorus atom and has a molecular weight of 600 or more.

2. The crosslinkable fluororesin composition according to Claim 1,
wherein the antioxidant has a phenol group and a phosphorus atom.

3. The crosslinkable fluororesin composition according to Claim 1 or 2,
wherein the fluororesin further has a unit based on another monomer other than ethylene and tetrafluoroethylene.

4. The crosslinkable fluororesin composition according to any one of Claims 1 to 3,
wherein the fluororesin has a hydroxyl group at a main chain terminal.

5. A molded body made of a molding material comprising a crosslinkable fluororesin composition,
wherein the crosslinkable fluororesin composition comprises
a fluororesin having a unit based on ethylene and a unit based on tetrafluoroethylene, is melt-moldable, and has a melting point of 210°C or higher,
a crosslinking agent having a plurality of unsaturated carbon bonds, and
an antioxidant having at least one of a phenol group and a phosphorus atom and has a molecular weight of 600 or more.

6. The molded body according to Claim 5,
wherein the antioxidant has a phenol group and a phosphorus atom.

7. The molded body according to Claim 5 or 6,
wherein the fluororesin further has a unit based on another monomer other than ethylene and tetrafluoroethylene.

8. The molded body according to any one of Claims 5 to 8,
wherein the fluororesin has a hydroxyl group at a main chain terminal.

9. A crosslinked molded body that is a crosslinked body of a molding material comprising a crosslinkable fluororesin composition,
wherein the crosslinkable fluororesin composition comprises
a fluororesin having a unit based on ethylene and a unit based on tetrafluoroethylene, is melt-moldable, and has a melting point of 210°C or higher,
a crosslinking agent having a plurality of unsaturated carbon bonds, and
an antioxidant having at least one of a phenol group and a phosphorus atom and has a molecular weight of 600 or more.

10. The crosslinked molded body according to Claim 9,
wherein the antioxidant has a phenol group and a phosphorus atom.

11. The crosslinked molded body according to Claim 9 or 10,
wherein the fluororesin further has a unit based on another monomer other than ethylene and tetrafluoroethylene.

12. The crosslinked molded body according to any one of Claims 9 to 11,
wherein the fluororesin has a hydroxyl group at a main chain terminal.

13. A coated wire having a coating layer,
wherein the coating layer is the crosslinked molded body according to any one of Claims 9 to 12.
